# EUROPÄISCHE PATENTANMELDUNG

(11) **EP 0 779 294 A1**
(43) Veröffentlichungstag der Anmeldung: **18.06.1997**
(21) Anmeldenummer: 96118176.5
(22) Anmeldetag: 13.11.1996
(51) Int. Cl.: C07F 9/6574

(54) **Halogenfreie cyclische Phosphorsäureester und Verfahren zu ihrer Herstellung**

(30) Priorität: 15.12.1995 DE 19546833; 31.05.1996 DE 19621880
(71) Anmelder: HOECHST AKTIENGESELLSCHAFT, 65926 Frankfurt am Main (DE)
(72) Erfinder: Staendeke, Horst, Dr., 53797 Lohmar (DE)

(57) **Zusammenfassung**

Die Erfindung betrifft halogenfreie cyclische Phosphorsäureester der allgemeinen Formel 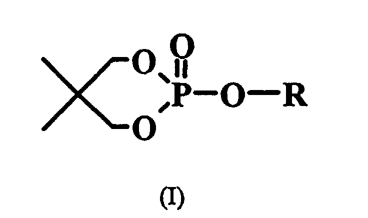 mit
- R =: 2-Methylphenyl, 3-Methylphenyl, 4-Methylphenyl, 2,3-Dimethylphenyl, 2,4-Dimethylphenyl, 2,5-Dimethylphenyl oder 3,4-Dimethylphenyl,
ein Verfahren zu ihrer Herstellung sowie ihre Verwendung als Flammschutzmittel.

## Beschreibung

Die Erfindung betrifft halogenfreie cyclische Phosphorsäureester, ein Verfahren zu ihrer Herstellung und ihre Verwendung.

Einige cyclische Phosphorsäureester sind bereits in der Literatur beschrieben. So findet sich im Chemical Abstracts 93, 133266 (1980) ein Hinweis auf verschiedene Halogenalkylester von cyclischen Phosphorsäureestern. Ferner wurden von R.M. Mc Connell und H.W. Coover jr. [J. Org. Chem 24, 630 - 635 (1959)] weitere cyclische Phosphorsäureester synthetisiert und charakterisiert.

Überraschenderweise konnte nun eine Reihe neuer halogenfreier cyclischer Phosphorsäureester synthetisiert und analytisch charakterisiert werden.

Die vorliegende Erfindung betrifft daher neue halogenfreie cyclische Phosphorsäureester der allgemeinen Formel (I) 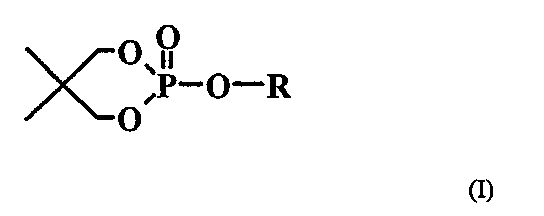 mit
- R =: 2-Methylphenyl, 3-Methylphenyl, 4-Methylphenyl, 2,3-Dimethylphenyl, 2,4-Dimethylphenyl, 2,5-Dimethylphenyl oder 3,4-Dimethylphenyl

Die Erfindung betrifft ebenfalls ein Verfahren zur Herstellung der vorgenannten cyclischen Phosphorsäureester, bei dem man in einem 1. Reaktionsschritt 2,2-Dimethyl-1,3-propandiol mit Phosphoroxichlorid zum cyclischen Phosphorsäureesterchlorid (II) umsetzt:

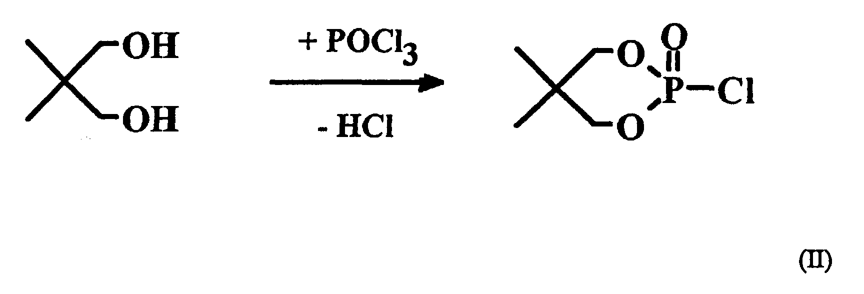

Das cyclische Phosphorsäureesterchlorid (II) wird dann in einem 2. Reaktionsschritt bei erhöhter Temperatur mit einem Phenol R-OH, wobei R die eingangs beschriebene Bedeutung hat, zur Reaktion gebracht, wobei unter Abspaltung von Chlorwasserstoff der halogenfreie cyclische Phosphorsäureester (I) gebildet wird:

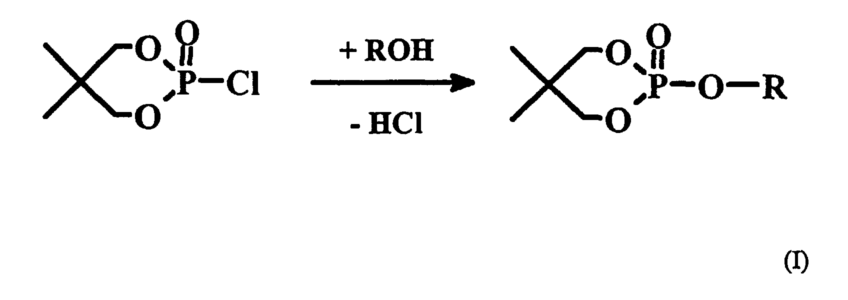

Die Umsetzungen können in geeigneten inerten Lösungsmitteln, wie Aromaten, Aliphaten, Cycloaliphaten oder Chloraliphaten, und in Gegenwart geeigneter tertiärer Amine, wie Triethylamin oder Pyridin, sowie in Gegenwart geeigneter Katalysatoren, wie Aluminiumchlorid, durchgeführt werden.

Die Umsetzungen können bei Normaldruck oder unter vermindertem Druck durchgeführt werden.

Die Erfindung betrifft weiterhin die Verwendung der erfindungsgemäßen halogenfreien cyclischen Phosphorsäureester als Flammschutzmittel.

### Beispiel 1

In einem ersten Reaktionsschritt wurden 208 g 2,2-Dimethyl-1,3-propandiol mit 306 g Phosphoroxichlorid [analog Verfahrensweise A aus J. Org. Chem. 24, 632 (1959)] zum 2-Chloro-5,5-dimethyl-2-oxo-1,3,2-dioxaphosphorinan umgesetzt. Das erhaltene Rohprodukt wurde aus Toluol/Cyclohexan umkristallisiert.

Für den nächsten Reaktionsschritt wurden dann 184,5 g (1 Mol) dieses Produkts in einem Rührreaktor in 1 l Toluol suspendiert, mit 108 g (1 Mol) 4-Methylphenol und 1,5 g Aluminiumchlorid (wasserfrei) versetzt und unter Rühren im Temperaturberich von 20 - 110 °C im Verlauf von 5 Stunden zur Reaktion gebracht.

Nachdem die Hälfte des Toluols im Vakuum abdestilliert worden war, wurden 500 ml Cyclohexan zugesetzt. Dann wurde unter Rühren abgekühlt, wobei sich ein feinkristalliner Feststoff abschied, der nach Filtration aus Toluol/Cyclohexan umkristallisiert wurde. Es wurden 207 g eines farblosen, kristallinen Produkts mit dem Schmelzpunkt 95 °C erhalten, dessen Elementaranalyse folgende Werte ergab:

| | |
|---|---|
| Kohlenstoff: | 56,3 % (theoretisch für C₁₂H₁₇O₄P: 56,2 %) |
| Wasserstoff: | 6,5 % (theoretisch für C₁₂H₁₇O₄P: 6,7 %) |
| Phosphor: | 12,1 % (theoretisch für C₁₂H₁₇O₄P: 12,1 %) |

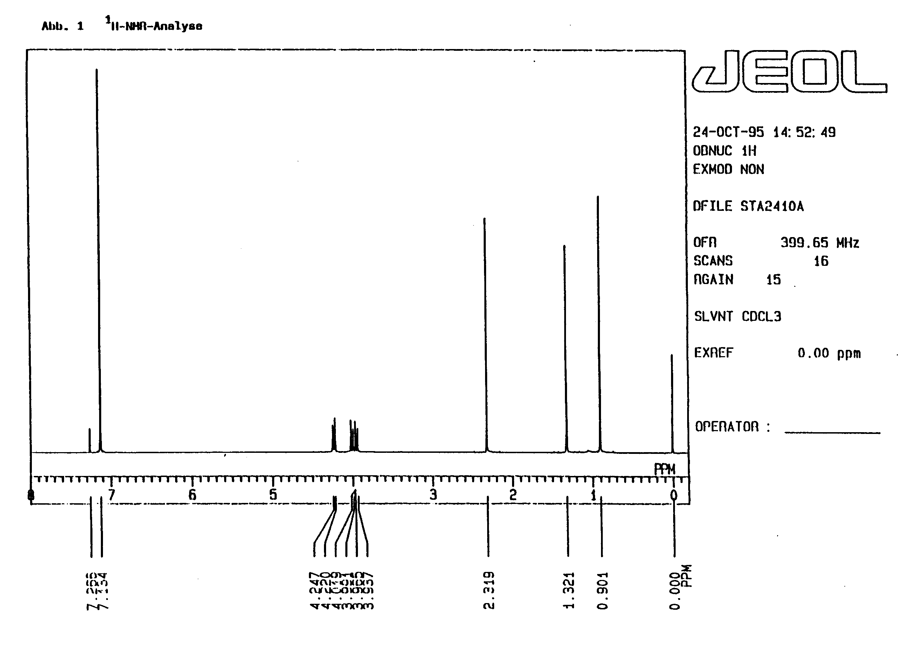

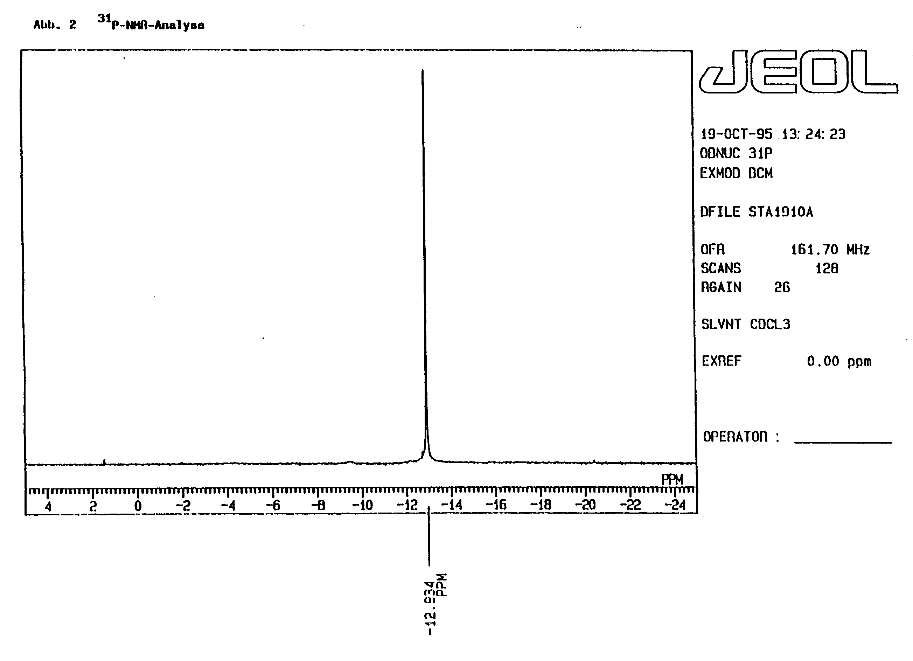

Nach den obigen Analysenwerten sowie der ¹H-NMR-Analyse (Abb. 1) und der ³¹P-NMR-Analyse (Abb. 2) handelt es sich um das Produkt 5,5-Dimethyl-2-(4-methyl)phenoxy-2-oxo-1,3,2-dioxaphosphorinan.

### Beispiel 2

Zunächst wurde wie in Beispiel 1 beschrieben 83,2 g 2,2-Dimethyl-1,3-propandiol mit 123 g Phosphoroxichlorid zum 2-Chloro-5,5-dimethyl-2-oxo-1,3,2-dioxphosphorinan umgesetzt. Im nächsten Reaktionsschritt wurden dann 97,6 g 3,4-Dimethylphenol, 250 ml Toluol und 1,5 g Aluminiumchlorid (wasserfrei) dazugegeben und unter Rühren während 12 h auf Rückflußtemperatur erhitzt. Der kristalline Feststoff wurde abgenutscht und mit Wasser gereinigt.
Es wurden 161 g eines weißen Feststoffs mit einer Reinheit von 99,8 % und einem Schmelzpunkt von 121 °C erhalten. Nach ³¹P-NMR und Elementaranalyse handelt es sich um das Produkt 5,5-Dimethyl-2-(3,4-dimethyl)phenoxy-2-oxo-1,3,2-dioxaphosphorinan.

### Beispiel 3

Zunächst wurde wie in Beispiel 1 beschrieben 104 g 2,2-Dimethyl-1,3-propandiol mit 154 g Phosphoroxichlorid zum 2-Chloro-5,5-dimethyl-2-oxo-1,3,2-dioxphosphorinan umgesetzt. Im nächsten Reaktionsschritt wurden dann 122 g 2,4-Dimethylphenol, 250 ml Toluol und 1,8 g Aluminiumchlorid (wasserfrei) dazugegeben und unter Rühren während 7 h auf Rückflußtemperatur erhitzt. Anschließend wurden 12 g 2,4-Dimethylphenol und 1,35 g Aluminiumchlorid (wasserfrei) in 20 ml Toluol nachdosiert und nochmals 7 h auf Rückfluß erhitzt. Es wurde eine gelartige Masse erhalten, aus der das Produkt 5,5-Dimethyl-2-(2,4-dimethyl)phenoxy-2-oxo-1,3,2-dioxaphosphorinan während einer Woche auskristallisierte.

### Beispiel 4

Zunächst wurde wie in Beispiel 1 beschrieben 112,3 g 2,2-Dimethyl-1,3-propandiol mit 166 g Phosphoroxichlorid zum 2-Chloro-5,5-dimethyl-2-oxo-1,3,2-dioxphosphorinan umgesetzt. Im nächsten Reaktionsschritt wurden dann 131,7 g 2,3-Dimethylphenol, 500 ml Toluol und 2,5 g Aluminiumchlorid (wasserfrei) dazugegeben und unter Rühren während 12 h auf Rückflußtemperatur erhitzt. Durch Zugabe von 1 l Cyclohexan wurde das Produkt ausgefällt und abgenutscht.

Es wurden 193 g eines weißen Feststoffs mit einem Schmelzpunkt von 79 °C erhalten. Nach ³¹P-NMR und Elementaranalyse handelt es sich um das Produkt 5,5-Dimethyl-2-(2,3-dimethyl)phenoxy-2-oxo-1,3,2-dioxaphosphorinan.

## Patentansprüche

1. Halogenfreie cyclische Phosphorsäureester der allgemeinen Formel (I) 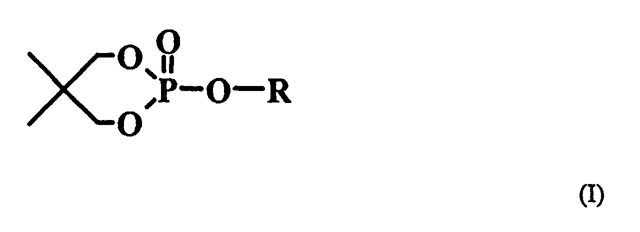 mit
R = 2-Methylphenyl, 3-Methylphenyl, 4-Methylphenyl, 2,3-Dimethylphenyl, 2,4-Dimethylphenyl, 2,5-Dimethylphenyl oder 3,4-Dimethylphenyl.

2. Verfahren zur Herstellung der halogenfreien cyclischen Phosphorsäureester nach Anspruch 1, dadurch gekennzeichnet, daß man in einem 1. Reaktionsschritt 2,2-Dimethyl-1,3-propandiol mit Phosphoroxichlorid zum cyclischen Phosphorsäureesterchlorid reagieren läßt, das dann in einem 2. Reaktionsschritt bei Temperaturen von 20 - 150 °C in Gegenwart eines Katalysators in einem Zeitraum von 2 - 12 Stunden mit einem Phenol R-OH, wobei R die gleiche Bedeutung wie in Anspruch 1 hat, umgesetzt wird.

3. Verfahren nach Anspruch 2, dadurch gekennzeichnet, daß die Umsetzungen in inerten Lösungsmitteln durchgeführt werden.

4. Verfahren nach Anspruch 2, dadurch gekennzeichnet, daß die Umsetzungen in Gegenwart stöchiometrischer Mengen an geeigneten tertiären Aminen als Chlorwasserstoffakzeptoren durchgeführt werden.

5. Verfahren nach Anspruch 2, dadurch gekennzeichnet, daß auch der 1. Reaktionsschritt in Gegenwart eines Katalysators durchgeführt wird.

6. Verwendung der halogenfreien cyclischen Phosphorsäureester aus Anspruch 1 oder hergestellt nach den Ansprüchen 2 bis 5 als Flammschutzmittel.
